(19)

Europäisches Patentamt

European Patent Office

Office européen des brevets

(11) **EP 2 952 928 A1**

(12) **EUROPEAN PATENT APPLICATION**

(43) Date of publication:
**09.12.2015 Bulletin 2015/50**

(51) Int Cl.:
***G01S 17/42*** *(2006.01)*     ***G01S 17/93*** *(2006.01)*

(21) Application number: **15168596.3**

(22) Date of filing: **21.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **04.06.2014  JP 2014115364**

(71) Applicant: **Hokuyo Automatic Co., Ltd.**
**Osaka**
**540-0028 (JP)**

(72) Inventor: **MORI, Toshihiro**
**Osaka, 540-0028 (JP)**

(74) Representative: **Betten & Resch**
**Patent- und Rechtsanwälte PartGmbB**
**Theatinerstraße 8**
**(Fünf Höfe)**
**80333 München (DE)**

(54) **LASER SENSOR AND AUTOMATIC GUIDED DEVICE**

(57)     A laser sensor 2, which is mounted on a mobile body and detects the presence or absence of an incoming body in monitoring areas based on reflected light with respect to measurement light scanned to the monitoring area, includes a signal input unit to receive a signal from speed sensors mounted on the mobile body, a transfer information calculation unit to calculate a speed and acceleration of the mobile body from the signal inputted to the signal input unit, a monitoring area setting unit to variably set the monitoring area based on the speed and the acceleration calculated by the transfer information calculation unit, and a signal output unit to output an incoming body detection signal when the incoming body is detected in the monitoring area.

Fig.2A

EP 2 952 928 A1

**Description**

Background of the Invention

Field of the Invention

The present invention relates to a laser sensor that is mounted on a mobile body and detects the presence or absence of an incoming body in a monitoring area based on reflected light with respect to measurement light with which the monitoring area is scanned, and an automatic guided device on which a distance measurement device is mounted.

Description of the Related Art

A distance measurement device, in which any of a time-of flight (TOF) system or an amplitude modulation (AM) system is adopted, is applied to a visual sensor in a robot or an automatic guided vehicle, an open/close sensor in a door, a monitor sensor that detects the presence or absence of an intruder in an area to be monitored, or a safety sensor that detects a person or an object approaching a dangerous apparatus and safely stops the apparatus.

As disclosed in Patent Document 1 (Japanese Unexamined Patent Application Publication No. 2007-256191), the TOF system is a system for calculating a distance D from a distance measurement device to an object existed in the area to be monitored, based on a detection time difference $\Delta t$ between measurement light, which is pulse-shaped laser light outputted to the area to be monitored, and reflected light from the object with respect to the measurement light. The distance D is calculated by use of a numerical formula below. It is noted that C represents a light speed in the numerical formula.

$$D = \Delta t \cdot C / 2$$

As disclosed in Patent Document 2 (Japanese Unexamined Patent Application Publication No. 2002-90454), the AM system is a system for calculating a distance D from a distance measurement device to an object existed in the area to be monitored, based on a phase difference $\Delta \varphi$ between the measurement light, which is amplitude-modulated and outputted to the area to be monitored, and the reflected light from the object with respect to the measurement light. The distance D is calculated by use of a numerical formula below. It is noted that C represents the light speed, and f represents a modulation frequency in the numerical formula.

$$D = \Delta \varphi \cdot C / (4\pi \cdot f)$$

The distance measurement device described above is mounted on a mobile body such as an automatic guided vehicle (hereinafter, referred to as "AGV (Automatic Guided Vehicle)") that conveys materials at a manufacturing site, and used as a safety sensor that detects an obstacle on a traveling path.

Laser sensors such as the distance measurement device, in which laser light is used as a light source, are required to comply with the requirements defined in IEC61493-1/3 and IEC61508, which are international standards for safety.

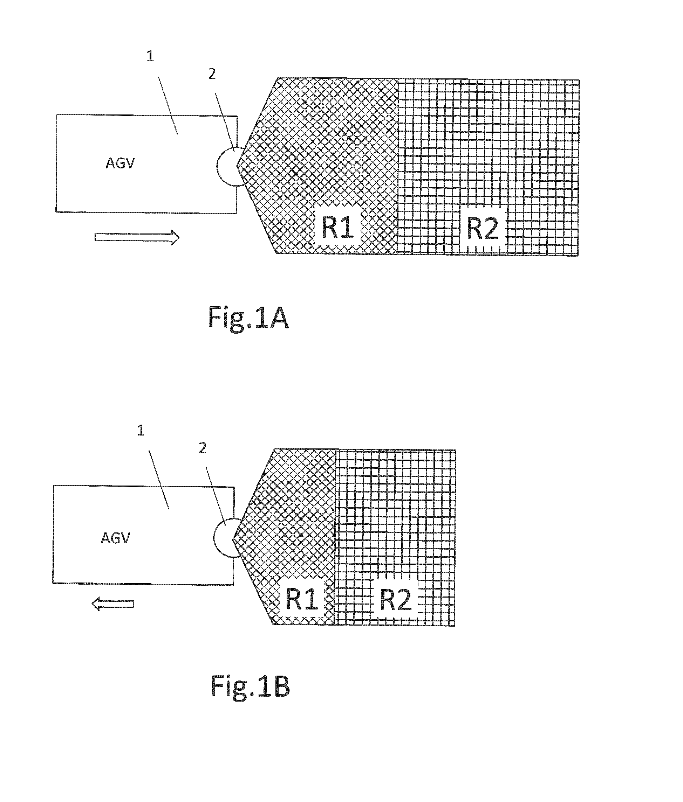

As illustrated in Figs. 1A and 1B, monitoring areas R1 and R2, in which the presence or absence of an incoming body such as a person or an obstacle is detected, are set in a laser sensor 2 in the advancing direction of the AGV1. When the presence of the incoming body is detected in the monitoring areas R1 and R2, the laser sensor 2 outputs information on the incoming body to the AGV 1. The AGV1 to which the information on the incoming body is inputted applies the brake or stops in order to avoid an accident and the like due to collision with the incoming body.

For example, regarding the monitoring areas, there is a case where two areas are set that include a first monitoring area R1 contiguous with the AGV1 and a second monitoring area R2 disposed adjacent to the first monitoring area R1 and separated from the AGV1 with respect to the first monitoring area R1.

When the incoming body such as a person or an obstacle is detected by the laser sensor 2 in the second monitoring area R2, a signal indicating the detection of the incoming body is outputted to the control unit of the AGV1. The control unit of the AGV 1, which receives the signal, outputs an alarm signal such as sound or light in order to avoid collision or stops the AGV1 under deceleration control. When the AGV1 stops in a state where the incoming body is detected in the second monitoring area R2, and the laser sensor 2 detects that the incoming body has left the second monitoring area R2, the control unit of the AGV1, which receives the signal indicating the absence of the incoming body, subsequently allows the AGV1 to perform a normal operation again and start traveling.

When the laser sensor 2 detects the incoming body such as a person or an obstacle in the first monitoring area R1, similarly, the signal indicating the detection of the incoming body is outputted to the control unit of the AGV1. The control unit of the AGV1, which receives the signal, executes emergency shutdown control aimed at an immediate stop, in order to avoid collision. Besides the case where the incoming body is detected in the first monitoring area R1, the emergency shutdown control is also executed in a case where failure of the laser sensor or the AGV is detected.

When the AGV1 is reactivated after the execution of the emergency shutdown control by means of the control unit of the AGV1, it is essential to perform time-consuming, complicated operations, for example, the operation of a safety check by an administrator in accordance with the above-mentioned safety standards, or the operation of a reset switch after the safety check. Accordingly, there is a problem that working efficiency during the conveyance of materials by use of the AGV1 is reduced.

When the second monitoring area R2 which is sufficiently long in the advancing direction of the AGV1 is set, and an incoming body is detected by the laser sensor 2 in the second monitoring area R2, the AGV1 can be securely stopped in the meantime during which the incoming body is detected in the second monitoring area R2, thereby avoiding a situation where the AGV1 is stopped based on the detection of the incoming body in the first monitoring area R1 in which the operation of a safety check by an administrator is required.

However, when the second monitoring area R2 which is sufficiently long in the advancing direction of the AGV1 is set at a manufacturing site where a multitude of automatic guided vehicles AGV1 travel on the same route, it becomes more likely that a preceding AGV1 is detected by the laser sensor 2 in the second monitoring area R2, which causes the frequent deceleration or stoppage. As a result, the distance between the automatic guided vehicles AGV1 is increased, and an inconvenient situation occurs where a working efficiency by use of the AGV1 is remarkably reduced.

Accordingly, in Patent Document 3 (US 2011/0077814), there has been proposed a system in which the laser sensor switches at least two different protective areas, that is, monitoring areas based on the traveling speed of the AGV. The system is constituted such that the signal of a one-system incremental encoder provided in the wheels of the AGV and a desired speed signal of the vehicle inputted from the controller of the AGV are inputted to the laser sensor, and when a difference between the signals described above is small, the laser sensor determines that the incremental encoder is in a normal state, and the monitoring areas are switched based on the traveling speed, and when a person is detected in the monitoring areas, a stop signal is outputted to the AGV. Furthermore, the system is constituted such that when the difference between the signals described above is large, the laser sensor determines that the incremental encoder is in an abnormal state, and the stop signal is outputted to the AGV.

However, as disclosed in Patent Document 3, when the constitution in which the monitoring areas are uniformly switched based on the traveling speed of the AGV is adopted, there is a problem in that a braking distance fluctuates due to the acceleration of that time even at the same speed, and the monitoring area cannot be appropriately set.

For example, even when the speed is equal, a braking distance becomes shorter in a case where a brake is applied during deceleration than a case where the brake is applied during acceleration. Furthermore, there is a possibility that the acceleration performance and deceleration performance of the AGV are remarkably changed by the weight of a load on board. Accordingly, when the monitoring area is uniformly set based on the speed, the monitoring area having a sufficient length with a margin in the advancing direction is required to be set. However, it is impossible to set a monitoring area having an optimal size when the monitoring area is uniformly set based on the speed.

Moreover, it is necessary to set the monitoring area having a more sufficient length, in consideration of a time delay from the output of the stop signal by means of the laser sensor to the start of a brake by means of the AGV.

Accordingly, when the size of the second monitoring area is set based on the braking distance of a case where the brake is started in a maximum acceleration state, in order to securely stop the AGV before the incoming body enters the first monitoring area, the distance between the automatic guided vehicles AGV is increased, and the work efficiency by use of the AGV is remarkably reduced. These problems have been left unsolved.

Also, in a case where the size of the second monitoring area is set based on the braking distance at the time of deceleration, even when the stop signal is outputted from the laser sensor at the time of acceleration, and the brake is started, the probability increases that the incoming body enters the first monitoring area by the time the AGV stops, which requires the operation of a safety check by the administrator when it returns to normal.

Furthermore, when the constitution disclosed by Patent Document 3 is adopted, it is necessary to input the desired speed signal of the vehicle from the controller of the AGV. Accordingly, there is a problem in that additional mounting costs are involved due to an increase in the number of signal lines between the AGV and the controller.

Summary of the Invention

The present invention has been achieved in view of the above circumstances to solve the technical problems, and it is an object of the present invention to provide a laser sensor and an automatic guided device, wherein even when a multitude of automatic guided devices AGV travel, an optimal monitoring area can be variably set based on the traveling state of each automatic guided vehicle AGV, thereby reducing a distance between the vehicles.

In order to achieve the above-described object, the first characteristic constitution of a laser sensor of the present invention is such that the laser sensor, which is configured to be mounted on a mobile body and detect presence or absence of an incoming body in a monitoring area based on reflected light with respect to measurement light scanned to the monitoring area, includes a signal input unit configured to receive a signal from a speed sensor mounted on the mobile body, a transfer information calculation unit configured to calculate a speed and acceleration of the mobile body from the signal inputted to the signal input unit, a monitoring area setting unit configured to variably set the monitoring area based on the speed and the acceleration calculated by the transfer information calculation unit, and a signal output unit configured to output an incoming body detection signal when the incoming body is detected in the monitoring area.

When the signal is inputted from the speed sensor mounted on the mobile body to the signal input unit of the laser sensor, the transfer information calculation unit calculates the speed and acceleration of the mobile body based on the signal inputted, and the monitoring area setting unit sets the monitoring area based on the speed and the acceleration. Accordingly, appropriate monitoring areas are always set based on the traveling state of the mobile body, and for example, while the incoming body is detected in the above-mentioned second monitoring area, the mobile body is set in the minimum monitoring area in a stoppable manner with high probability.

In addition to the first characteristic constitution described above, the second characteristic constitution of the present invention is such that the monitoring area setting unit extends or contracts a reference monitoring area set in advance at least in a traveling direction based on the speed and the acceleration calculated by the transfer information calculation unit, thereby variably generating the monitoring area.

The reference monitoring area set in advance is extended or contracted at least in the traveling direction based on the speed and the acceleration of the mobile body, thereby generating a new monitoring area. Accordingly, an arithmetic operation to generate the monitoring area can be simplified. For example, when the reference monitoring area is set corresponding to various traveling states where the mobile body proceeds straight, makes a right turn, or makes a left turn, the monitoring areas can be variably set in a very easy manner.

In addition to the first characteristic constitution described above, the third characteristic constitution of the present invention is such that the monitoring area setting unit applies the speed and the acceleration calculated by the transfer information calculation unit to a monitoring area generating function having parameters inclusive of speeds and acceleration, thereby variably generating the monitoring area.

The arithmetic operation of the function is performed by substituting the speed and acceleration calculated by the transfer information calculation unit to the speed and acceleration which are set as the parameters of the monitoring area generating function set in advance, thereby variably generating the monitoring area. For example, the monitoring area generating function is produced based on the uses of the mobile body and the traveling environments, so that appropriate monitoring areas can be generated in accordance with various uses and the traveling environments.

In addition to any of the first to third characteristic constitutions described above, the fourth characteristic constitution of the present invention is such that when the acceleration calculated is lower than a predetermined threshold value, the transfer information calculation unit sets reference acceleration set in advance as the acceleration of the mobile body.

When the acceleration is low and unstable, as in a time when the mobile body starts traveling from stop or starts acceleration or deceleration from the constant speed traveling, there is an apprehension that an appropriate monitoring area cannot be generated. Accordingly, when a calculated acceleration is lower than a predetermined threshold value, the monitoring area is generated in such a manner as to regard the predetermined reference acceleration as the acceleration of the mobile body in order to absorb the subsequent fluctuation of the acceleration.

In addition to any of the first to fourth characteristic constitutions described above, the fifth characteristic constitution of the present invention is such that the monitoring area setting unit variably generates a first monitoring area contiguous with the mobile body and a second monitoring area disposed adjacent to the first monitoring area and separated from the mobile body with respect to the first monitoring area.

The generation of the first monitoring area contiguous with the mobile body and the second monitoring area disposed adjacent to the first monitoring area and separated from the mobile body with respect to the first monitoring area based on the speed and the acceleration of the mobile body can differentiate correspondence between a case where the incoming body is detected in the first monitoring area contiguous with the mobile body and a case where the incoming body is detected in the second monitoring area separated from the mobile body. For example, when the incoming body is detected in the first monitoring area, the mobile body is urgently stopped due to the occurrence of a state of emergency, and when the incoming body is detected in the second monitoring area, the mobile body is decelerated due to the occurrence of an avoidable, abnormal state, which makes it possible to flexibly handle the mobile body in such a manner as to stop or re-accelerate corresponding to the situation.

In addition to any of the first to fifth characteristic constitutions described above, the sixth characteristic constitution of the present invention is such that the incoming body detection signal outputted from the signal output unit is a signal that includes information on a distance on which it is determined whether the mobile body stops or decelerates.

It is necessary to determine whether or not the mobile body immediately stops or decelerates based on the incoming body detection signal outputted to the mobile body. Accordingly, the incoming body detection signal includes the information on a distance, so that the mobile body can appropriately determine whether to stop immediately or decelerate based on the information. It is noted that the incoming body detection signal is a signal inclusive of the information on a distance on which it is determined whether or not the mobile body stops or decelerates, and the above-mentioned distance need not necessarily be a distance from the laser sensor to the incoming body. For example, regarding the fifth characteristic constitution described above, a signal, by which it can be distinguished whether the monitoring area where the incoming body is detected is the first monitoring area or the second monitoring area, may be applied.

In addition to any of the first to sixth characteristic constitutions described above, the seventh characteristic constitution of the present invention is such that the monitoring area setting unit variably sets the monitoring area based on a delay time from detection of the incoming body to start of a brake of the mobile body, in addition to the speed and the acceleration calculated by the transfer information calculation unit.

The delay time from the detection of the incoming body to the start of the brake of the mobile body is taken into consideration in terms of the settings of the monitoring area, so that a more appropriate monitoring area can be set.

The first characteristic constitution of an automatic guided device of the present invention is such that the laser sensor that includes any of the first to seventh characteristic constitutions described above is mounted on the automatic guided device, and the automatic guided device includes an incoming body detection signal input unit configured to receive the incoming body detection signal from the signal output unit.

The mobile body can appropriately handle the incoming body based on the incoming body detection signal inputted from the laser sensor to the incoming body detection signal input unit.

In addition to the first characteristic constitution described above, the second characteristic constitution of the present invention is such that the automatic guided device includes a traveling control unit configured to control a transfer speed based on the incoming body detection signal inputted to the incoming body detection signal input unit.

The traveling control unit of the mobile body can appropriately control the traveling based on the incoming body detection signal in such a matter as not to collide with the incoming body.

As described above, according to one aspect of the present invention, the laser sensor and the automatic guided device can be provided wherein even when a multitude of automatic guided devices AGV travel, an optimal monitoring area can be variably set based on the traveling state of each automatic guided vehicle AGV, thereby reducing a distance between the vehicles.

Brief Description of the Drawings

Fig. 1A is an explanatory diagram illustrating monitoring areas set at a time of acceleration by means of a laser sensor of the present invention.

Fig. 1B is an explanatory diagram illustrating the monitoring areas set at a time of deceleration by means of the laser sensor.

Fig. 2A is a perspective diagram illustrating the external appearance of the laser sensor.

Fig. 2B is an explanatory diagram illustrating the internal structure of the laser sensor.

Fig. 3A is an explanatory diagram illustrating an interface which electrically connects the laser sensor with a mobile body.

Figs. 3B and 3C are explanatory diagrams illustrating the monitoring areas set based on reference monitoring-area setting information.

Fig. 4A is a functional block diagram of the control circuit of the laser sensor.

Fig. 4B is a functional block diagram of the signal processing unit and the system control unit of the laser sensor.

Fig. 5A is an explanatory diagram illustrating a stopping distance in a case where braking is started when the mobile body shifts from stop to acceleration.

Fig. 5B is an explanatory diagram illustrating the stopping distance in a case where the braking is started when the mobile body accelerates in the course of traveling.

Fig. 5C is an explanatory diagram illustrating the stopping distance in a case where the braking is started when the mobile body travels at a constant speed.

Fig. 6 is a basic explanatory diagram illustrating the change of a length in the traveling direction of the monitoring area which is variably set by the laser sensor.

Fig. 7 is an explanatory diagram illustrating the dynamic change of the length in the traveling direction of the monitoring area which is variably set by the laser sensor.

Fig. 8 is an explanatory diagram illustrating the monitoring area which is variably set by the laser sensor based on the traveling state of the mobile body.

Description of the Preferred Embodiment

Hereinafter, a laser sensor and an automatic guided device of the present invention will be described. Figs. 1A and 1B illustrate a mobile body 1 as an automatic guided vehicle (AGV), a laser sensor 2 mounted on the tip end portion of a vehicle body in the advancing direction of the mobile body 1, and monitoring areas R1 and R2 in which the presence or absence of an incoming body is detected by the laser sensor 2. The monitoring areas R1 and R2 are variably set based on the traveling state of the mobile body 1. An outline arrow represents the degree and direction of acceleration. For example, the monitoring areas R1 and R2 are extended in the advancing direction at the time of acceleration and contracted in the advancing direction at the time of deceleration. A first monitoring area R1 serves as a protective area, and a second monitoring area R2 serves as a warning area.

The laser sensor 2 monitors the two monitoring areas inclusive of the first monitoring area R1 contiguous with the mobile body 1 and the second monitoring area R2 disposed adjacent to the first monitoring area R1 and separated from the mobile body 1 with respect to the first monitoring area R1, and when the laser sensor 2 detects that the incoming body enters the monitoring areas R1 and R2, the laser sensor 2 outputs an incoming body detection signal to the mobile body 1. The mobile body 1 performs necessary braking control such as deceleration based on the incoming body detection signal, thereby avoiding a contact accident against the incoming body.

When the laser sensor 2 detects the incoming body such as a person or an obstacle in the first monitoring area R1 which is a protective area, the mobile body 1 executes emergency shutdown control in order to avoid collision, immediately stops, and continuously holds a stoppage state until the processing of confirmation is executed by an operator. When the laser sensor 2 detects the incoming body such as a person or an obstacle in the second monitoring area R2 which is a warning area, the mobile body 1 outputs an alarm signal such as sound or light in order to avoid collision, performs deceleration control, and stops. When the incoming body leaves the second monitoring area R2 after the mobile body 1 has stopped or before the mobile body 1 completely stops, the mobile body 1 returns under the normal traveling control.

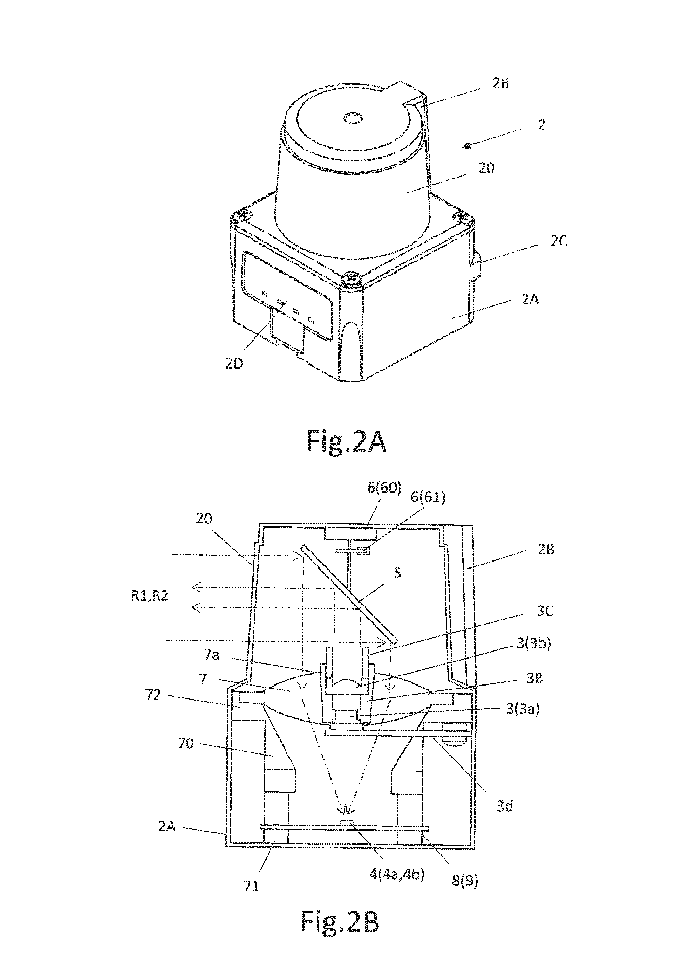

Fig. 2A illustrates the external appearance of the laser sensor 2 mounted on the mobile body 1, and Fig. 2B illustrates the internal structure of the laser sensor 2. As illustrated in Fig. 2A, the laser sensor 2 includes a lower portion casing 2A formed in an approximately rectangular parallelepiped and an upper portion casing 2B that includes an optical window 20 formed in an approximately cylindrical shape. A signal connection unit 2C and a display portion 2D are provided in the lower portion casing 2A.

As illustrated in Fig. 2B, the laser sensor 2 includes a light emitting unit 3, a light receiving unit 4, a deflecting mirror 5, a scanning mechanism 6, a light receiving lens 7, a control substrate 8, and the like.

The scanning mechanism 6 is configured to include a motor 60 provided on an inner wall on the upper surface of the upper portion casing 2B and an encoder 61 that detects the rotational state of the motor 60. The deflecting mirror 5 is rotatably attached to the rotating shaft of the motor 60 at an inclination angle of 45 degrees with respect to the rotating shaft. The encoder 61 functions as a scanning angle detection unit for measurement light.

The light emitting unit 3 and the light receiving unit 4 are arranged on the same shaft center of the rotating shaft of the motor 60. The light emitting unit 3 includes a laser diode 3a that emits the light of an emission wavelength of a near infrared region, and a light emitting lens 3b. The light receiving unit 4 is configured to include a photodiode 4a and an amplifier circuit 4b and arranged on the control substrate 8 disposed on the bottom portion of the lower portion casing 2A.

Also, a control circuit 9 is provided on the control substrate 8, and the control circuit 9 controls the motor 60 based on a signal from the encoder 61, controls the light emission of the laser diode 3a at a predetermined time, and processes the signal received by the light receiving unit 4.

The peripheral portion of the light receiving lens 7 is fixed on the collar portion 72 of a lens holder 70 that includes four sets of leg portions 71, and a cylindrical light emitting lens holder 3B is inserted into a cylindrical notch portion 7a formed in the center of the optical axis of the light receiving lens 7, and the light emitting lens 3b is supported by the light emitting lens holder 3B and fixed with a lens cap 3C from above.

The laser diode 3a is arranged on the lower end portion of the light emitting lens holder 3B, and the end portion of a substrate 3d formed in a rectangular shape, on which the laser diode 3a is mounted, is fixed on the collar portion 72 of the lens holder 70 with bolts. Also, the control substrate 8 is fixed by means of the four sets of leg portion 71 of the lens holder 70.

Pulse-shaped measurement light outputted from the light emitting unit 3 is beam-shaped by the light emitting lens 3b and enters the deflecting mirror 5. The measurement light is deflected and reflected on the deflecting mirror 5 that is drivingly rotated by the motor 60, and the measurement light penetrates the optical window 20 and is scanned toward the monitoring areas R1 and R2.

Reflected light with respect to the measurement light enters the deflecting mirror 5 through the optical window 20 and is condensed by the light receiving lens 7 into the light receiving unit 4, and an optical signal is converted by the light receiving unit 4 into an electric signal and inputted to a signal processing unit 10 in the control circuit 9.

The control circuit 9 calculates the reflection position of the reflected light from the laser sensor 2, that is, a distance from the position of an object, based on a time difference between a light emitting time of the laser diode 3a and a detection time of the reflected light received by the light receiving unit 4.

Furthermore, the control circuit 9 determines whether or not the incoming body exists in the monitoring areas R1 and R2 set in advance based on the scanning direction of the measurement light which is brought about based on the pulse signals from the encoder 61, and the distance from the position of an object, and when it is determined that the incoming body exists in the monitoring areas R1 and R2, the incoming body detection signal is outputted from a signal output unit provided in the control circuit 9 to the mobile body 1.

When a speed control unit embedded in the mobile body 1 recognizes that the incoming body exists in the first monitoring area R1 which is a protective area, based on incoming body information outputted from the laser sensor 2, the mobile body 1 immediately performs an emergency stop and keeps on stopping until a predetermined release operation is performed. When the speed control unit recognizes that the incoming body exists in the second monitoring area R2 which is a warning area, the speed control unit executes the deceleration control so as to avoid a contact accident against the incoming body and returns to a normal traveling state afterward.

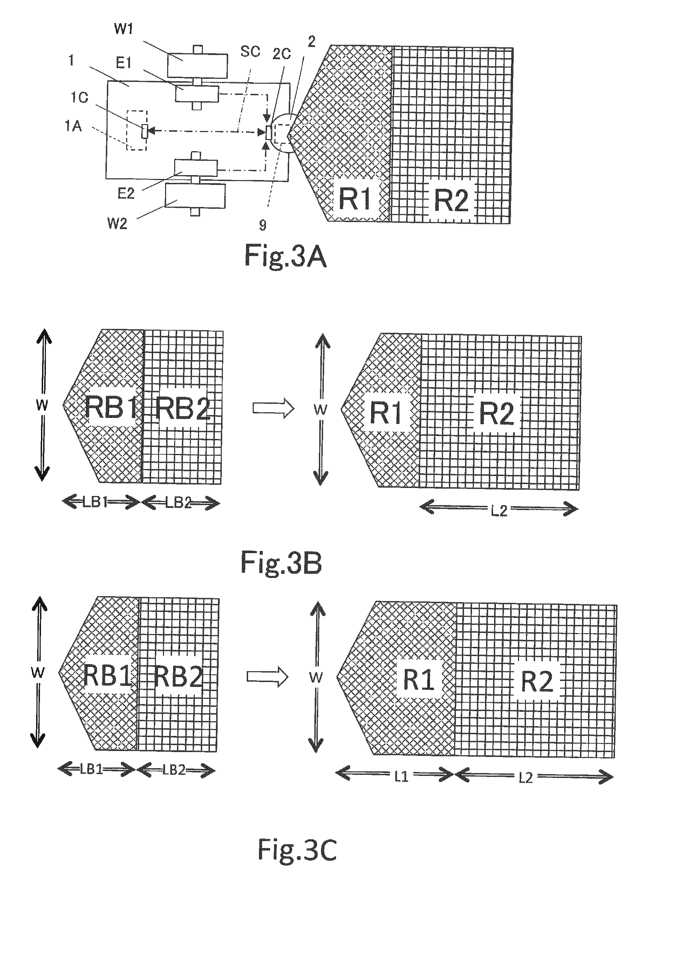

As illustrated in Fig. 3A, incremental encoders E1 and E2 that detect the rotational speed are provided in the axle shafts of the right and left wheels W1 and W2 of the mobile body 1, and the output of respective incremental encoders E1 and E2 is inputted to the control circuit 9 via the signal connection unit 2C of the laser sensor 2.

It is configured that the signal connection unit 2C of the laser sensor 2 and the mobile body 1 are connected via a signal cable SC, and the incoming body detection signal is inputted to an incoming body detection signal input unit 1C provided in a traveling control unit 1A constituting part of the control unit of the mobile body 1 via the signal cable SC. When the incoming body detection signal is inputted from the laser sensor 2, the traveling control unit 1A controls the traveling speed of the mobile body 1 in such a manner as to avoid a contact accident against the incoming body.

Also, it is configured that reference monitoring-area setting information is transmitted from the traveling control unit 1A of the mobile body 1 to the control circuit 9 of the laser sensor 2 via the signal cable SC. Preferably, the signal cable, through which the incoming body detection signal and the reference monitoring-area setting information are transmitted, is configured to be made up of, for example, a serial communication cable, but may be configured to be made up of a parallel signal line.

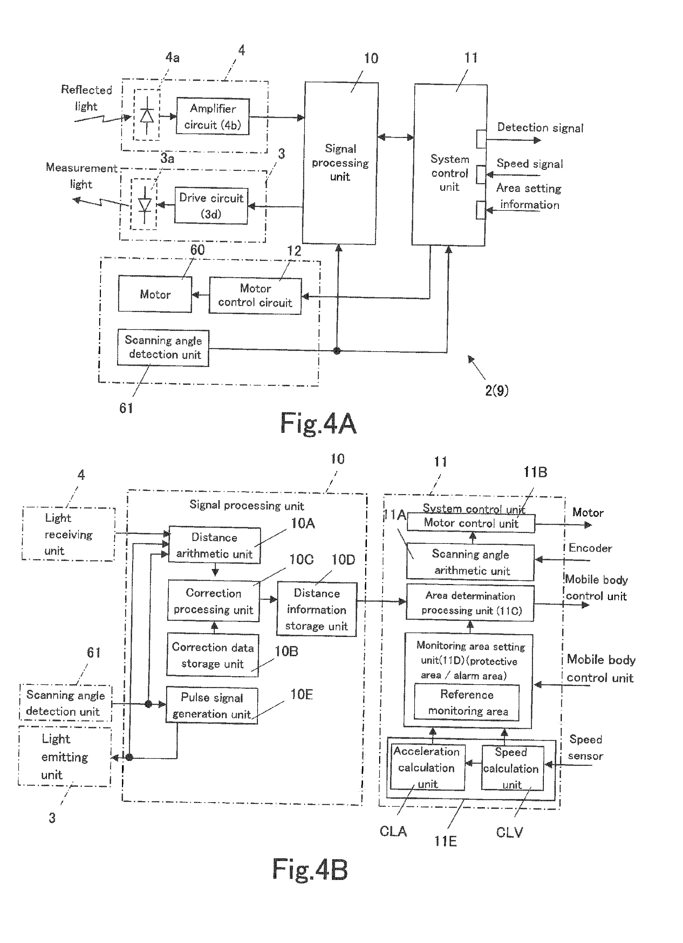

Fig. 4A illustrates a functional block diagram of the control circuit 9 embedded in the laser sensor 2. The control circuit 9 includes a drive circuit 3d to drive the laser diode 3a, the light receiving unit 4 made up of the photodiode 4a and the amplifier circuit 4b, the signal processing unit 10 inclusive of a digital signal processor that performs the arithmetic operation of distance measurement and calculates a distance to an object from which reflected light is detected, a system control unit 11 inclusive of a microcomputer, a motor control circuit 12 to drive the motor 60, and the like.

As illustrated in Fig. 4B, the signal processing unit 10 includes a pulse signal generation unit 10E that calculates a scanning angle of the measurement light outputted based on the pulse signals from a scanning angle detection unit (encoder 61) and outputs a light-emitting requirement signal to the light emitting unit 3 for each predetermined scanning angle, a distance arithmetic unit 10A in which the TOF system is adopted, a correction data storage unit 10B that stores correction data to correct arithmetic errors attributed to characteristic variation of sensor constitutional members such as the light receiving unit, a correction processing unit 10C to correct the arithmetic result of the distance arithmetic unit 10A based on the correction data, a distance information storage unit 10D to store distance measurement data after the correction, and the like.

Similarly, the light-emitting requirement signal is simultaneously inputted to the distance arithmetic unit 10A as a reference timing signal regarding the arithmetic operation of the distance measurement. Also, when the measurement light that is scanned in a rotary manner by the deflecting mirror 5 scans a reference position where the optical window 20 ends on the upper portion casing 2B, the correction data is defined in such a manner that the value of the measured distance arithmetically calculated based on the reflected light from a reflection member provided at the reference position corresponds to a reference value set in advance.

The system control unit 11 includes a scanning angle arithmetic unit 11A, a motor control unit 11 B, an area determination processing unit 11C, a monitoring area setting unit 11D, a transfer information calculation unit 11E, and the like.

The scanning angle arithmetic unit 11A is a function block that calculates a rotation speed and a scanning angle based on a pulse signal from the scanning angle detection unit (the encoder 61). The motor control unit 11B is a function block that controls the motor 60 in such a manner as to be rotated at a constant speed based on the rotation speed calculated by the scanning angle arithmetic unit 11A.

The transfer information calculation unit 11E is a function block that includes a speed calculation unit CLV to calculate the speed V of the mobile body 1 based on the pulse signals inputted in a signal input unit IP from the two-system incremental encoders E1 and E2, and an acceleration calculation unit CLA to calculate the acceleration A of the mobile body 1 based on the calculated speed V. The incremental encoders E1 and E2 are configured to output the pulses, each of which has a different phase (A phase and B phase), and the advancing direction is determined based on the two phases, and the transfer distance is calculated based on the number of pulses.

The monitoring area setting unit 11D is a function block that extends or contracts the reference monitoring area defined by the reference monitoring-area setting information set in advance based on the speed and acceleration of the mobile body 1 that are calculated by the transfer information calculation unit 11E, thereby variably setting the monitoring areas R1 and R2.

The area determination processing unit 11C is a function block that determines whether or not the object is the incoming body positioned in the monitoring areas R1 and R2, based on the distance data on the distance from the object, which is calculated by the signal processing unit 10, and when it is determined that the object is the incoming body, the incoming body detection signal is outputted from an output port of a microcomputer, which serves as a signal output unit.

Note that, in the present embodiment, the area determination processing unit 11C, the monitoring area setting unit 11D, and the transfer information calculation unit 11E are provided as the function block in the system control unit 11, but may be provided in the signal processing unit 10.

The incoming body detection signal is a signal inclusive of information on a distance on which it is determined whether or not the mobile body 1 stops or decelerates, and the identifying signal of the monitoring area where the incoming body exists is added as the information on the distance. It is noted that the distance data of the incoming body may be included in the identifying signal. The mobile body 1 can appropriately determine whether to immediately stop or decelerate based on the information on the distance.

That is, the laser sensor 2 includes the signal input unit that receives the signals from the incremental encoders E1 and E2, which serve as a speed sensor mounted on the mobile body 1, the transfer information calculation unit 11E that calculates the speed and acceleration of the mobile body 1 based on the signals inputted into the signal input unit, the monitoring area setting unit 11D that variably sets the monitoring areas based on the speed and acceleration calculated by the transfer information calculation unit 11E, and the signal output unit that outputs the incoming body detection signal when the incoming body is detected in the monitoring areas.

With the above-mentioned constitution, appropriate monitoring areas R1 and R2 are always set based on the traveling state of the mobile body 1. For example, the minimum second monitoring area R2 can be set with high probability, so as to stop the mobile body 1 while the incoming body is still detected in the second monitoring area R2.

Also, when the acceleration is low and unstable, as in a time when the mobile body 1 starts traveling from stop or starts acceleration or deceleration from the constant speed traveling, there is an apprehension that an appropriate monitoring area cannot be generated. Accordingly, when a calculated acceleration is lower than a predetermined threshold value, the transfer information calculation unit 11E is configured to regard the reference acceleration set in advance as the acceleration of the mobile body 1 in order to absorb the subsequent fluctuation of the acceleration. The monitoring area setting unit 11D is configured to generate the monitoring area based on the reference acceleration.

It is preferable that the monitoring area setting unit 11D be configured to extend or decrease the reference monitoring area set in advance at least in the traveling direction, based on a delay time from the detection of the incoming body to the start of a brake by means of the mobile body 1, that is, a response time delay, in addition to the speed and acceleration calculated b

y the transfer information calculation unit 11E, thereby variably generating the monitoring areas R1 and R2.

The function blocks 11E, which perform the processing of signals from the incremental encoders E1 and E2 that are the speed sensor, are duplexed in the system control unit 11 for the purpose of a failsafe system, and the signals of A phase and B phase, which are respectively inputted from the incremental encoders E1 and E2, are each inputted to the duplexed transfer information calculation units 11E.

That is, the transfer information calculation units 11E and interface circuits which input the signals of A phase and B phase to the transfer information calculation units 11E, are provided in a redundant manner, respectively. Then, the microcomputers, each of which constitutes the transfer information calculation units 11E, are connected via a communication line, and compare the results of signal processing with each other. When the both results of the signal processing are matched, normality is determined, and it is configured to adopt the results as the speed and acceleration that are used for setting the monitoring areas by means of the monitoring area setting unit 11D constructed in one of the microcomputers.

When the both results of the signal processing are not matched, the failure of the incremental encoders E1 and E2 is determined, and failure determination information is outputted to the mobile body 1. The traveling control unit of the mobile body 1 immediately controls, stops the mobile body 1, and continuously holds a stoppage state until the recovery processing and the confirmation processing are executed by an operator. That is, the same operation as that of the case where the incoming body is detected in the first monitoring area R1 is executed.

In the four-wheel mobile body 1 that includes front wheels for steering and rear wheels to be driven, the incremental encoders E1 and E2 may be installed in any of the front wheels or the rear wheels. Moreover, the incremental encoders E1 and E2 may be installed both in the front wheels and the rear wheels. In any cases, it is preferable that the above-mentioned failsafe constitution be adopted.

Regarding the mobile body 1, which performs the revolving operation based on different rotational speeds of the right and left wheels of the mobile body 1, above-mentioned failsafe processing functions only when the mobile body 1 proceeds straight forward, and the failsafe processing is not performed during the rotation in which the output signals of the incremental encoders E1 and E2 are different. In other words, only when the mobile body 1 proceeds straight forward, the monitoring areas are variably set by the monitoring area setting unit 11D.

In this case, an identifying signal regarding straight-forward traveling or rotational traveling is transmitted from the traveling control unit 1A of the mobile body 1 to the laser sensor 2 via the signal cable SC, and it is determined by the laser sensor 2 whether or not the monitoring area is variably set. During the rotation, the traveling speed of the mobile body 1 is limited, and the laser sensor 2 sets the fixed monitoring areas R1 and R2 set in advance. When the failsafe processing is performed during the rotation, it is only necessary to redundantly provide the incremental encoders E1 and E2.

Hereinafter, the specific example of the monitoring areas set by the monitoring area setting unit 11D will be described. In Figs. 3B and 3C, a first reference monitoring area RB1 and a second reference monitoring area RB2, which are defined based on the reference monitoring-area setting information inputted from the mobile body 1, are illustrated on the left side of the diagrams, and the first monitoring area R1 and the second monitoring area R2, which are set by the monitoring area setting unit 11D, are illustrated on the right side of the diagrams.

The first reference monitoring area RB1 is set in such a manner that the laser sensor 2 is positioned as an apex of a pentagon in a plane view (similar to the shape of a home plate in the baseball game) having a width W and a length LB1 in the advancing direction, and the second reference monitoring area RB2 is formed in a rectangular shape having a width W and a length LB2 in the advancing direction.

The monitoring area setting unit 11D variably sets the length in the advancing direction based on the speed and acceleration of the mobile body 1 and the response time delay of the mobile body 1. In Fig. 3B, an example is illustrated where the length in the advancing direction is set to a length L2 only in the second reference monitoring area RB2, and in Fig. 3C, an example is illustrated where the length in the advancing direction of the first reference monitoring area RB1 is set to a length L1, and the length in the advancing direction of the second reference monitoring area RB2 is set to the length L2.

In the examples, the width W is kept constant in any cases, but the width W may be configured to be variably set based on the speed and acceleration of the mobile body 1, the response time delay of the mobile body 1, and traveling environments. Furthermore, the angle of the apex corresponding to the position of the laser sensor 2 in the first reference monitoring area RB1 may be variably set. The shape of each reference monitoring area is not limited to the pentagon or the rectangle, but a polygon, an ellipse, or a complex shape based on the combination of the above-mentioned shapes may be applied. For example, there is a case where the mobile body 1 travels on a wide area or travels on an area of which the width is limited, as the passage partitioned with walls on the bilateral sides thereof. In this case, a reference monitoring area having a plurality of widths W is configured to be provided in advance, thereby appropriately switching to the reference monitoring area having an adequate width in accordance with the traveling environment. The switching of the reference monitoring area in accordance with the traveling environment may be made in response to a signal as area setting information from the outside of the laser sensor or may be determined by the laser sensor itself based on the detection information of the area detennination processing unit (11C).

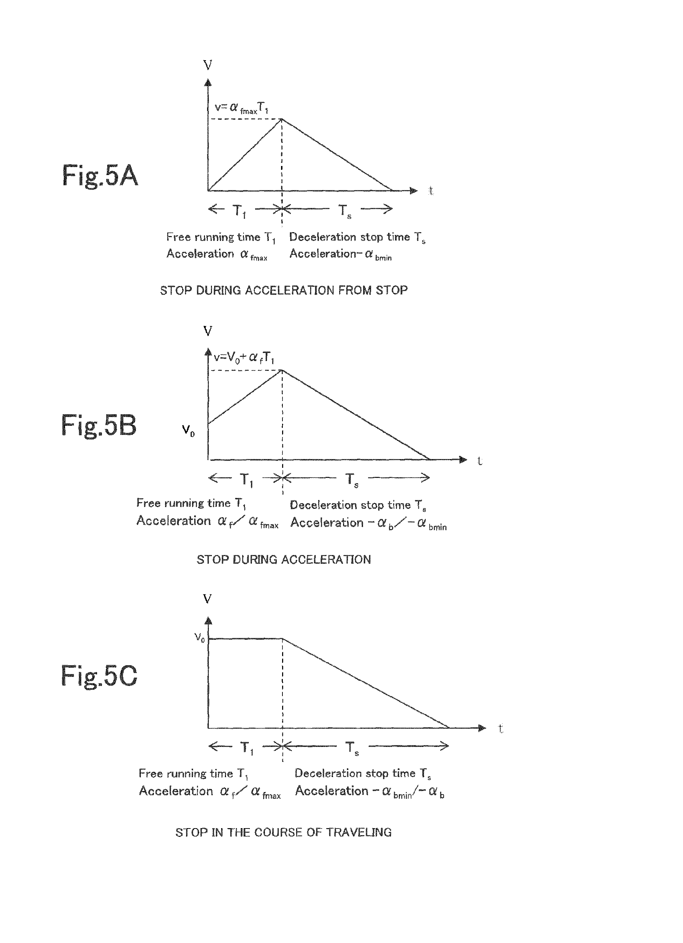

The lengths in the advancing direction of the first reference monitoring area RB1 and the second reference monitoring area RB2, for example, are determined based on arithmetic results for each of plural traveling patterns illustrated below. Fig. 5A illustrates a typical traveling pattern in a case where braking is started when the mobile body 1 shifts from stop to acceleration. Fig. 5B illustrates a typical traveling pattern in a case where the braking is started when the mobile body 1 accelerates in the course of traveling. Fig. 5C illustrates a typical traveling pattern in a case where the braking is started when the mobile body 1 travels at a constant speed.

A free running time $T_1$ illustrated in Figs. 5A, 5B, and 5C is a time representing a response time delay from the detection of the incoming body by means of the laser sensor 2 to the start of a brake by means of the mobile body 1. A deceleration stop time $T_S$ is a time from the start of a brake to the stop of the mobile body 1. The deceleration stop time $T_S$ is a value obtained by dividing a speed at the start of the brake by acceleration (negative value). The braking distance is represented by an area of a region surrounded by a temporal axis and a straight line representing a speed characteristic. As is obvious in the diagram, the braking distance is a value obtained by adding a free running distance and a braking stopping distance.

In both of the duplexed transfer information calculation units 11E, when a difference between the input signals from the incremental encoders E1 and E2 is lower than a predetermined threshold value, and its reliability is determined, one of the transfer information calculation units 11E calculates the speed of the mobile body 1 based on the output signals of the incremental encoders E1 and E2 and calculates acceleration in such a manner as to divide a difference $\Delta V$ between the calculated speed and a speed that was calculated in the past and stored in a memory, by the time difference $\Delta t$ corresponding to the difference $\Delta V$.

The average value of the two speeds corresponding to the two incremental encoders E1 and E2, which are calculated by the transfer information calculation units 11E, is outputted as a speed Vo of the mobile body 1 to the monitoring area setting unit 11D, and the average of two acceleration values is outputted as acceleration $\alpha_f$ and $\alpha_b$ of the mobile body 1 to the monitoring area setting unit 11D.

In the case of $\Delta V > 0$, the acceleration is represented as $\alpha_f$, and in the case of $\Delta V < 0$, the acceleration is represented as $\alpha_b$ (f is an abbreviation of "forward", and b is an abbreviation of "backward"). Preferably, the time difference $\Delta t$ is set to an integer multiple of a scanning cycle of the laser sensor 2, and in the present embodiment, the time difference $\Delta t$ is set to 30 milliseconds, which is the scanning cycle of the laser sensor 2, and the monitoring areas R1 and R2 are renewed every 30 milliseconds.

When the acceleration $\alpha_f$ is lower than a predetermined threshold value $\alpha_{fth}$, acceleration $\alpha_{fmax}$ is adopted as reference acceleration. When the acceleration $\alpha_b$ is lower than a predetermined threshold value $\alpha_{bth}$, acceleration $\alpha_{dmin}$ is adopted as reference acceleration. The acceleration $\alpha_{fmax}$ is the acceleration of mobile body with no load (the maximum acceleration to be assumed), and the acceleration $\alpha_{dmin}$ is the acceleration of mobile body with the maximum movable load (the minimum deceleration to be assumed). The threshold values $\alpha_{fth}$ and $\alpha_{bth}$ are values appropriately set in accordance with the traveling characteristics of mobile body 1.

The monitoring area setting unit 11D calculates the braking distance based on numerical formulas described below. The calculated braking distance or a value obtained by adding a predetermined margin to the calculated braking distance is set as the length L2 in the advancing direction in the second monitoring area R2 in Figs. 3B and 3C.

A: in the case of $\alpha_f < \alpha_{fth}$, the braking distance is represented as follows:

$$\text{Braking Distance} = V_0 \times T_1 + 1/2 \times \alpha_{fmax} \times T_1^2 + 1/2 \times (\alpha_{fmax} \times T_1)^2 / \alpha_{bmin}$$

(corresponding to Fig. 5A in the case of Vo = 0)

B: in the case of $\alpha_f \geq \alpha_{fth}$, the braking distance is represented as follows:

$$\text{Braking Distance} = V_0 \times T_1 + 1/2 \times \alpha_f \times T_1^2 + 1/2 \times (\alpha_f \times T_1)^2 / \alpha_{bmin}$$

C: in the case of $\alpha_b < \alpha_{bth}$, the braking distance is represented as follows:

$$\text{Braking Distance} = V_0 \times T_1 + 1/2 \times V_0^2 / \alpha_{bmin}$$

D: in the case of $\alpha_b \geq \alpha_{bth}$, the braking distance is represented as follows:

$$\text{Braking Distance} = V_0 \times T_1 + 1/2 \times V_0^2 / \alpha_b$$

The monitoring area setting unit 11D adopts the acceleration $\alpha_{bmax}$ in place of the acceleration $\alpha_b$ in the above numerical formulas, so that the calculated braking distance or a value obtained by adding a predetermined margin to the calculated braking distance is set as the length L1 in the advancing direction in the first monitoring area R1 in Fig. 3C. The acceleration $\alpha_{bmax}$ can be adopted as the maximum acceleration at the time of deceleration for the purpose of emergency shutdown, for example, as the negative maximum acceleration in a case where the drive motor of the mobile body 1 is locked.

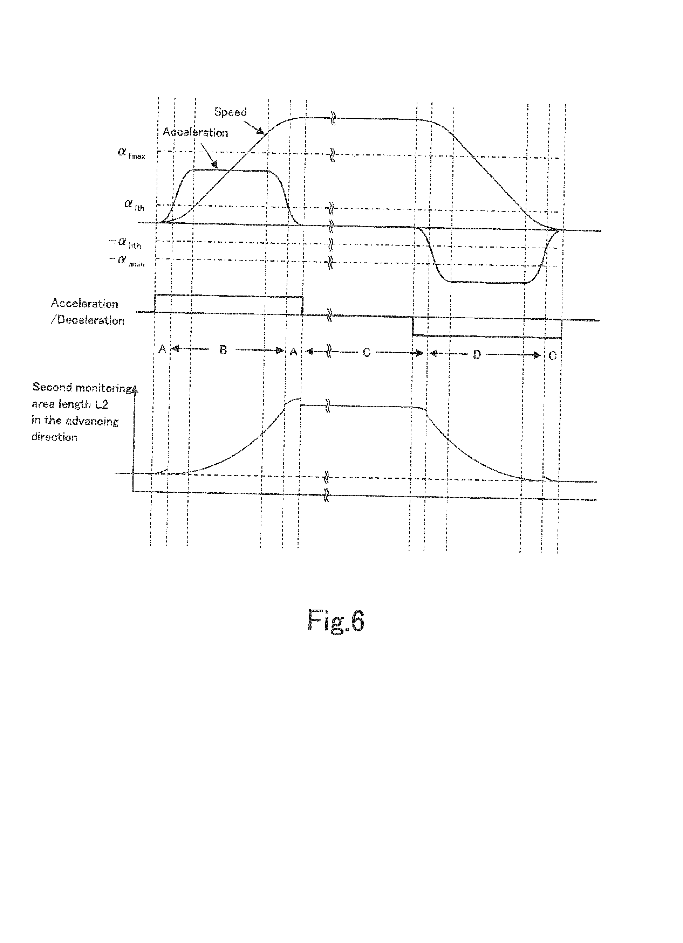

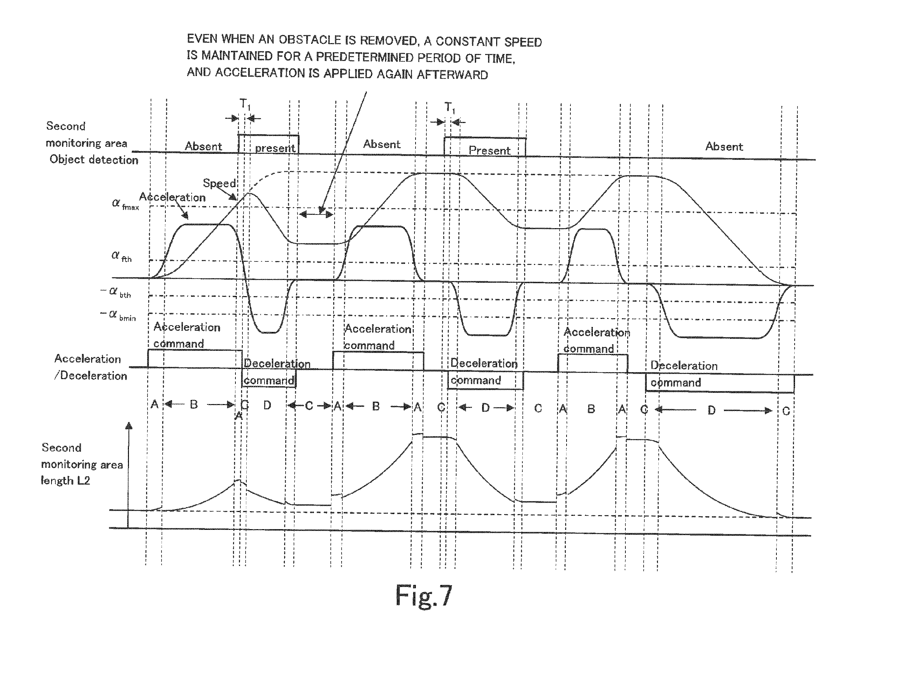

Fig. 6 illustrates the length L2 in the advancing direction in the second monitoring area R2, which is set by the monitoring area setting unit 11D, corresponding to the above-mentioned braking distances A, B, C, and D. Fig. 7 illustrates a state where the length L2 in the advancing direction in the second monitoring area R2 is dynamically set. In case that the incoming body is detected by the laser sensor 2 in the second monitoring area R2 and no longer detected while the mobile body 1 is braking, the mobile body 1 become accelerated and the incoming body may be detected again. Accordingly, it is preferable that the mobile body 1 be configured to control acceleration after the speed of that time is maintained for a constant period of time, without accelerating instantaneously.

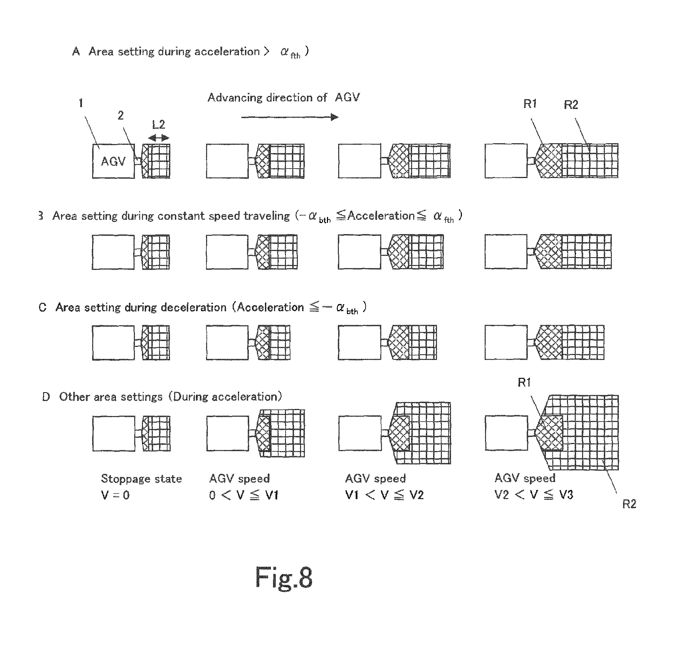

Fig. 8 illustrates how the monitoring areas R1 and R2 change with respect to the speed V and the acceleration $\alpha$ of the AGV, which is the mobile body 1. For example, in the illustration, at the time of acceleration, the monitoring areas R1 and R2 are extended in the advancing direction as the speed increases (see A in Fig. 8), and at the time of constant speed traveling, the monitoring areas R1 and R2 are extended in the advancing direction to some extent as the speed increases, but not much, compared with the lengths in the advancing direction of the monitoring areas R1 and R2 during acceleration (see B in Fig. 8). Also, the present embodiment is not limited to the aspect in which the monitoring areas R1 and R2 are extended or contracted in the advancing direction, but may be constituted that the monitoring areas R1 and R2 are extended or contracted in the width direction orthogonal to the advancing direction. In this case, the monitoring areas R1 and R2 can be set in such a manner as to extend or contract in the width direction at a constant ratio with respect to the calculated braking distance.

It may be constituted that the monitoring area setting unit 11D applies the speed and acceleration calculated by the transfer information calculation unit 11E to a monitoring area generating function inclusive of parameters such as the speed and acceleration in such a manner that the monitoring areas R1 and R2 are variably generated. For example, it may be such that the sizes of the monitoring areas R1 and R2, in terms of the advancing direction and the width direction orthogonal to the advancing direction, are set in advance as the monitoring area generating function inclusive of parameters such as the speed and acceleration, and the speed and acceleration calculated are substituted into the monitoring area generating function, thereby setting the monitoring areas R1 and R2. It may be constituted that the monitoring area generating function is inputted from the mobile body 1 to the laser sensor 2 at an initial stage.

For example, the monitoring area generating function is produced based on the uses of the mobile body and the traveling environments, so that appropriate monitoring areas can be generated in accordance with various uses and the traveling environments. It is noted that, besides the constitution in which the reference area setting information is transmitted from the mobile body 1, it may be such that the reference area setting information is configured to be separately set in the laser sensor 2 as an initial setting. Similarly, it may be such that the monitoring areas set in accordance with the speed and acceleration are correlated with the speed and acceleration in advance as an initial setting, set and stored in the laser sensor, and the monitoring area setting unit 11D appropriately selects the monitoring areas R1 and R2 based on the calculation results of the transfer information calculation units 11E.

The above-mentioned embodiment is one example of the laser sensor and the automatic guided device of the present invention. Needless to say, the specific structure of the laser sensor and the specific circuit constitution of the signal processing unit and the system control unit can be appropriately modified within the scope in which the functions and effects of the present invention are provided. The technological scope of the present invention is not limited to the above-mentioned embodiments.

**Claims**

1. A laser sensor configured to be mounted on a mobile body and detect presence or absence of an incoming body in a monitoring area based on reflected light with respect to measurement light scanned to the monitoring area is **characterized in that** the laser sensor includes:

   a signal input unit configured to receive a signal from a speed sensor mounted on the mobile body;
   a transfer information calculation unit configured to calculate a speed and acceleration of the mobile body from the signal inputted to the signal input unit;
   a monitoring area setting unit configured to variably set the monitoring area based on the speed and the acceleration calculated by the transfer information calculation unit; and
   a signal output unit configured to output an incoming body detection signal when the incoming body is detected in the monitoring area.

2. The laser sensor according to claim 1,
   wherein the monitoring area setting unit extends or contracts a reference monitoring area set in advance at least in a traveling direction based on the speed and the acceleration calculated by the transfer information calculation unit, thereby variably generating the monitoring area.

3. The laser sensor according to claim 1,
   wherein the monitoring area setting unit applies the speed and the acceleration calculated by the transfer information calculation unit to a monitoring area generating function having parameters inclusive of speeds and acceleration, thereby variably generating the monitoring area.

4. The laser sensor according to any one of claims 1 to 3,
   wherein when the acceleration calculated is lower than a predetermined threshold value, the transfer information calculation unit sets predetermined reference acceleration as the acceleration of the mobile body.

5. The laser sensor according to any one of claims 1 to 4,
   wherein the monitoring area setting unit variably generates a first monitoring area contiguous with the mobile body and a second monitoring area disposed adjacent to the first monitoring area and separated from the mobile body with respect to the first monitoring area.

6. The laser sensor according to any one of claims 1 to 5,
   wherein the incoming body detection signal outputted from the signal output unit is a signal that includes information on a distance on which it is determined whether the mobile body stops or decelerates.

7. The laser sensor according to any one of claims 1 to 6,
   wherein the monitoring area setting unit variably sets the monitoring area based on a delay time from detection of the incoming body to start of a brake of the mobile body, in addition to the speed and the acceleration calculated by the transfer information calculation unit.

8. An automatic guided device on which the laser sensor according to any one of claims 1 to 7 is mounted, comprising:

   an incoming body detection signal input unit configured to receive the incoming body detection signal from the signal output unit.

9. The automatic guided device according to claim 8, further comprising a traveling control unit configured to control a transfer speed based on the incoming body detection signal inputted to the incoming body detection signal input unit.

EP 2 952 928 A1

Fig.1A

Fig.1B

13

Fig.2A

Fig.2B

Fig.3A

Fig.3B

Fig.3C

Fig.4A

Fig.4B

Fig.5A

$$v = \alpha_{fmax}T_1$$

$\leftarrow T_1 \rightarrow\!\!\!\!\!\leftarrow T_s \rightarrow$

Free running time $T_1$    Deceleration stop time $T_s$
Acceleration $\alpha_{fmax}$    Acceleration $-\alpha_{bmin}$

STOP DURING ACCELERATION FROM STOP

Fig.5B

$$v = V_0 + \alpha_f T_1$$

$V_0$

$\leftarrow T_1 \rightarrow\!\!\!\!\!\leftarrow T_s \rightarrow$

Free running time $T_1$
Acceleration $\alpha_f / \alpha_{fmax}$    Deceleration stop time $T_s$
Acceleration $-\alpha_b / -\alpha_{bmin}$

STOP DURING ACCELERATION

Fig.5C

$V_0$

$\leftarrow T_1 \rightarrow\!\!\!\!\!\leftarrow T_s \rightarrow$

Free running time $T_1$    Deceleration stop time $T_s$
Acceleration $\alpha_f / \alpha_{fmax}$    Acceleration $-\alpha_{bmin} / -\alpha_b$

STOP IN THE COURSE OF TRAVELING

17

Fig.6

EVEN WHEN AN OBSTACLE IS REMOVED, A CONSTANT SPEED
IS MAINTAINED FOR A PREDETERMINED PERIOD OF TIME,
AND ACCELERATION IS APPLIED AGAIN AFTERWARD

Fig.7

EP 2 952 928 A1

A  Area setting during acceleration > $\alpha_{fth}$ )

Advancing direction of AGV

1

2

L2

AGV

R1    R2

B  Area setting during constant speed traveling ($-\alpha_{bth} \leqq$ Acceleration $\leqq \alpha_{fth}$ )

C  Area setting during deceleration (Acceleration $\leqq -\alpha_{bth}$ )

D  Other area settings (During acceleration)

R1

| Stoppage state | AGV speed | AGV speed | AGV speed |
| V = 0 | $0 < V \leqq V1$ | $V1 < V \leqq V2$ | $V2 < V \leqq V3$ |

R2

# Fig.8

20

Europäisches
Patentamt

European
Patent Office

Office européen
des brevets

# EUROPEAN SEARCH REPORT

Application Number

EP 15 16 8596

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/293856 A1 (FOESSEL ALEX D [US] ET AL) 28 December 2006 (2006-12-28) | 1-3,5-9 | INV.<br>G01S17/42<br>G01S17/93 |
| Y | * abstract; figures 2,6,7,9 *<br>* paragraphs [0003], [0013] - [0016], [0018], [0023], [0027], [0029] - [0034], [0040], [0041], [0045], [0047], [0052] * | 4 | |
| X | US 2004/254728 A1 (POROPAT GEORGE VLADIMIR [AU]) 16 December 2004 (2004-12-16) | 1-3,6,7 | |
| Y | * paragraphs [0001], [0011], [0013], [0014], [0017], [0027] - [0030], [0034], [0036], [0037], [0040] * | 4 | |
| X | US 2012/101701 A1 (MOSHCHUK NIKOLAI K [US] ET AL) 26 April 2012 (2012-04-26) | 1,3,5-9 | |
| Y | * paragraphs [0004], [0005], [0018], [0019], [0020], [0021] * | 4 | |
| Y | US 2014/032094 A1 (HEINRICHS-BARTSCHER SASCHA [DE] ET AL) 30 January 2014 (2014-01-30) | 4 | |
| | | | TECHNICAL FIELDS SEARCHED (IPC) |
| A | * paragraphs [0064], [0066], [0070], [0072], [0073], [0075], [0086], [0090], [0091], [0092], [0093], [0095], [0098] * | 1-3,5-9 | G01S<br>G05D<br>G01V<br>B60W |
| A | US 2014/114526 A1 (ERB FRANK [DE]) 24 April 2014 (2014-04-24)<br>* abstract; figure 6b *<br>* paragraphs [0013], [0015], [0016], [0020], [0038], [0042], [0044], [0045], [0049], [0058] * | 1-3,6-9 | |
| A,D | US 2011/077814 A1 (HABERER MANFRED [DE]) 31 March 2011 (2011-03-31)<br>* abstract; claim 1; figure 2 *<br>* paragraphs [0045], [0046] * | 1,3,6-9 | |

The present search report has been drawn up for all claims

| Place of search | Date of completion of the search | Examiner |
|---|---|---|
| Munich | 19 October 2015 | Grübl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 16 8596

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2015

| Patent document cited in search report | Publication date | Patent family member(s) | Publication date |
|---|---|---|---|
| US 2006293856 A1 | 28-12-2006 | EP 1742086 A1<br>US 2006293856 A1 | 10-01-2007<br>28-12-2006 |
| US 2004254728 A1 | 16-12-2004 | NONE | |
| US 2012101701 A1 | 26-04-2012 | CN 102452396 A<br>DE 102011054344 A1<br>US 2012101701 A1 | 16-05-2012<br>26-04-2012<br>26-04-2012 |
| US 2014032094 A1 | 30-01-2014 | CN 103282249 A<br>CN 103370238 A<br>DE 102010051203 A1<br>EP 2637905 A1<br>EP 2637906 A1<br>ES 2535272 T3<br>ES 2535274 T3<br>JP 2013543811 A<br>JP 2013544203 A<br>KR 20130118909 A<br>KR 20130140072 A<br>US 2014032094 A1<br>US 2014052355 A1<br>WO 2012062451 A1<br>WO 2012062452 A1 | 04-09-2013<br>23-10-2013<br>16-05-2012<br>18-09-2013<br>18-09-2013<br>07-05-2015<br>07-05-2015<br>09-12-2013<br>12-12-2013<br>30-10-2013<br>23-12-2013<br>30-01-2014<br>20-02-2014<br>18-05-2012<br>18-05-2012 |
| US 2014114526 A1 | 24-04-2014 | EP 2722687 A1<br>US 2014114526 A1 | 23-04-2014<br>24-04-2014 |
| US 2011077814 A1 | 31-03-2011 | EP 2302416 A1<br>US 2011077814 A1 | 30-03-2011<br>31-03-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007256191 A
- JP 2002090454 A

- US 20110077814 A